(19) Europäisches Patentamt

European Patent Office

Office européen des brevets

(11) Publication number: **0 466 124 A1**

## EUROPEAN PATENT APPLICATION

(21) Application number: **91111443.7**

(22) Date of filing: **10.07.91**

(51) Int. Cl.⁵: **C08J 7/04**, C09D 127/08, //C08L67:02

(30) Priority: **13.07.90 JP 186037/90**

(43) Date of publication of application:
**15.01.92 Bulletin 92/03**

(84) Designated Contracting States:
**DE GB**

(71) Applicant: **KONICA CORPORATION**
**26-2, Nishi-shinjuku 1-chome Shinjuku-ku Tokyo(JP)**

(72) Inventor: **Yajima, Takatoshi**
**Konica Corporation, 1 Sakura-machi Hino-shi, Tokyo(JP)**
Inventor: **Araki, Hiromitu**
**Konica Corporation, 1 Sakura-machi Hino-shi, Tokyo(JP)**
Inventor: **Ueda, Eiichi**
**Konica Corporation, 1 Sakura-machi Hino-shi, Tokyo(JP)**

(74) Representative: **Türk, Gille, Hrabal**
**Brucknerstrasse 20**
**W-4000 Düsseldorf 13(DE)**

(54) **Process for preparing polyester films.**

(57) Surface treatment of polyester film by coating with vinylidene chloride copolymer latex containing a filler of sub micron size anti-blocking agent is disclosed. With a specific recipe and a controlled heat treatment, a film having the both, super barrier and anti-blocking properties are obtainable.

EP 0 466 124 A1

EP 0 466 124 A1

**FIELD OF THE INVENTION**

This invention relates to a process of preparing a polyester film subject to a barrier treatment carried out by making use of a vinylidene chloride latex.

**BACKGROUND OF THE INVENTION**

It has already been known that a thermoplastic resin film is coated with a vinylidene chloride copolymer latex and thereby reinforcing the barrier property of the film against the gas.

There have been the known methods including, for example, one method in which a vinyl type copolymer latex containing vinylidene chloride in an amount of at least 35 wt% is coated on a sheet of film and dried and, after drying it, it is stretched at a high temperature, so that the resulting composite film may be applied to photography, (See Japanese Patent Examined Publication No. 30-3437/1955); or the other methods in which a vinylidene chloride copolymer is coated on a sheet of film and the resulting layer is so heated as to be fused, so that its barrier property can be improved, (See Japanese Patent Publication Open to Publica Inspection, - hereinafter referred to as 'Japanese Patent O.P.I. Publication-Nos. 49-10973/1974 and 57-165253/1982)

In the above-mentioned processes, the blocking property is deteriorated and a film cannot be taken up in the rolled form as it is, because a vinylidene chlorise copolymer is fused to be in the non-crystallized state.

For preventing the above-mentioned disadvantages, there proposes a method in which a small amount of a vinylidene chloride copolymer having a crystallization acceleration function and a high melting point is mixed in. (See Japanese Patent O.P.I. Publication No. 58-176235/1983)

The above-mentioned method, a suitable crystallinity can be obtained after completing a heat treatment, however, the crystallization still proceeds even after taking up in the rolled form so as to have a higher crystallinity. Therefore, the post-processabilities such as an adhesion property are deteriorated.

Besides the above, there proposes a method in which three kinds of latexes are so compounded as to keep the balance between a crystallinity and a blocking property. (See Japanese Patent O.P.I. Publication No. 60-250041/1985)

In order that a coated layer is formed by a latex coating, the steps of making latex particles adhered and fused are essentially required. If the adhesion and fusion of the latex particles, it is liable to remain pin-holes and cracks, a barrier property cannot satisfactorily be improved by an admixture or the like even when trying to fuse a film to increase the wet degrees thereof in a heating treatment and, on the contrary, there may be some instances where some disadvantages such as the increase of blocking property may be produced.

It has been well known that the blocking may be prevented by adding an antiblocking agent such as silica and wax. However, the blocking agents produce pin-holes. Therefore, the blocking property has not been improved with keeping a necessary barrier property.

On the other hand, in the other film bases for photographic use, a dimensional consistency has seriously been required and the problem of the dimensional variations of films caused by the adsorption of moisture has been raised. Therefore, the barrier property is more demanded. To meet this demand, when trying to reduce the incidence of pin-holes and cracks by thickening a latex coated layer, the adhesion property and layer producibility may be detriorated reciprocally. It is the matter of course that the barrier property improvement cannot be expected when coating a thin layer.

Therefore, it is the actual situations that the barrier processing techniques having been embodied by making use of vinylidene chloride are required to be fundamentally reviewed.

**SUMMARY OF THE INVENTION**

It is an object of the invention to provide a process of preparing a vinylidene chloride coated polyester film excellent in barrier property and without having a blocking property.

The above-mentioned object of the invention can be achieved with a process of preparing a barrier layer coated polyester film, wherein at least one side of the polyester film is coated thereon with a coating solution containing finely particulate powder having an average particle size within the range of 0.05 to 15 $\mu$m and a vinylidene chloride copolymer latex and a heat treatment is then applied thereto at a temperature not lower than the melting point of the vinylidene chloride copolymer.

**DETAILED DESCRIPTION OF THE INVENTION**

2

The finely particulate powder having an average particle size within the range of 0.05 to 15 $\mu$m applicable to the invention gives the latex coated surface an appropriate rough surface. The antiblocking agents are selected from the colorless antiblocking agents not affecting any barrier properties such as a moisture resistance. The inorganic powders include, for example, those of silicon oxide, titanium oxide, aluminium oxide, potassium oxide, sodium oxide, zinc oxide, tin oxide, barium oxide, $\alpha$-$Fe_2O_3$, talc, kaolin, and calcium sulfate. The organic powders applicable to the invention include, for example, those of an acrylostyrene type resin, a benzoguanamine type resin, a melamine type resin, a polyolefin type resin, a polyester type resin, a polyamide resin, a polyimide type resin, and a polyfluoroethylene resin.

When the average particle size of an antiblocking agent is smaller than 0.05 $\mu$m, the antiblocking agent has no antiblocking property. When the average particle size thereof exceeds 15 $\mu$m, the functions of the functional layer being laminated on each of the antiblocking particle and having a specific role are affected and an opaqueness -or, a haze- is produced. Therefore, the average particle size thereof is desirably within the range of 0.1 to 5 $\mu$m. A proportional amount of the antiblocking agent is desirably within the range of 0.5 to 6.0 mg/m$^2$ when it is contained in the afore-mentioned coating solution and is then dispersively coated on a polyester film.

The vinylidene chloride content of the above-mentioned vinylidene chloride copolymer is desirably within the range of 70 to 99.5 wt%. When it is less than 70 wt%, the barrier property becomes deficient. When it exceeds 99.5 wt%, the layer producibility is spoiled. It is, therefore, desirable that the content thereof is within the range of 85 to 95 wt%.

An average particle size of the above-mentioned latexes is within the range of, desirably, 0.05 to 0.3 $\mu$m and, preferably, 0.1 to 0.13 $\mu$m, provided, both of the barrier property and the layer producibility can be satisfiable.

In the above-mentioned coating solution -hereinafter referred to as a 'particle dispersion solution'- containing the antiblocking agent anf the vinylidene chloride copolymer latex, the layer producibility cannot be satisfiable unless the solid contents of the latexes are not less than 4 wt%. On the other hand, when it exceeds 50 wt%, the fluidity of the particle dispersion solution is deteriorated so as to hinder the coatability.

As for the monomers copolymerizable with vinylidene chloride of a vinylidene chloride copolymer applicable to the invention, the following monomers can be used independently or in combination; namely, vinyl chloride, vinyl acetate, acrylonitrile, methacrylonitrile, methyl acrylate, ethyl acrylate, propyl acrylate, butyl acrylate, octyl acrylate, 2-ethyl hexyl acrylate, methyl methacrylate, acrylic acid, methacrylic acid, itaconic acid, sodium styrene sulfonate, and methoxy polyethylene glycol methacrylate. The copolymers have a limitation to a heat treatment or to Tg. It is, therefore, the matter of course that the kinds and amounts of the monomers thereof are to satisfy the above-mentioned limitation.

For the polymerization of the vinylidene chloride copolymers, any one of ordinary type anionic or nonionic emulsifiers or the mixtures thereof may be used. The polymerization is to be made at a temperature within the range of 40 to 80$^\circ$C.

The above-mentioned particle dispersion solution may be coated on at least one side of a non-oriented film or on at least one side of a uniaxial stretched film and/or a biaxial stretched film.

In advance of coating the particle dispersion solution on the polyester film, an oxidation treatment and/or the coating of an anchor-coating agent -hereinafter referred to as an 'AC agent'- may be applied onto the film. The AC agents applicable thereto include, for example, the solutions of either an acrylic resin emulsion or an organic solvent, or the solutions of the organic solvents for the adhesives made of either polyurethane or polyester, each of which is commonly used.

There is no special limitation to the amount of latexes to be coated. However, they are suitably used in an amount capable of coating up at a time and, to be more concrete, in an amount of the order within the range of 1 to 20 g/m$^2$ in terms of the resin contents thereof.

The above-mentioned heat treatment is desirably be carried out at a high temperature of 30$^\circ$C or higher and, preferably, 60$^\circ$C or higher than the melting points of the vinylidene chloride copolymers relating to the invention. At any rate, the heat treatments are carried out at a temperature within the range of 180 to 240$^\circ$C, depending on the kinds of the copolymers. The heating means include, for example, a blast of hot air, an emission of infrared rays, and a heat-roller contact. The heat treating time is desirably within the range of the order of 0.5 to 30 seconds.

In the invention, when a laminate stretch film is prepared by the combination of a vinylidene chloride latex coating and a film stretching, it is desirable that, after coating and dried the latex, the film is uni- or biaxially stretched and a heat treatment is then carried out. It is the matter of course to carry out a combination of a heat treatment and a stretching or heat set. After the heat treatment, the film is cooled and wound into rolls.

**EXAMPLES**

The advantages of the invention will now be concretely detailed with reference to the inventive examples 1 throught 10 and the comparative examples 1 through 6 each for comparing to the examples of the invention.

The requirements given to the inventive exapmles and the comparative examples are shown in the following Table-1.

〈Preparation of a particle dispersion solution〉

A vinylidene chloride copolymer latex,-Kurehalon Latex DOA-X2 having a melting point of 142.5°C, manufactured by Kureha Chemical Industrial Co.-, was suitably diluted in pure water and, whereinto, silica having various average particle sizes were mixed up in a specific amounts as an antiblocking agent, so that a particle dispersion solution could be prepared.

〈Preparation of a polyester film having a barrier layer〉

Non-oriented film (thickness: 1000 $\mu$m) obtained by quenching the polyethylene terephthalate melt extruded (through a T die at 280°C) into a film on a cooling drum was preheated to 90°C and stretched three times its original length in the machine direction. After that, the above-mentioned particle dispersion solution was coated on the both sides of the uniaxially stretched film and then dried up. Thereafter, the resulting uniaxially stretched film thus coated was stretched 3 times its original length at 100°C in the transverse direction, followed by heat set at a specific temperature, so that a polyester film with barrier layer of 1.5 $\mu$m dry coat thickness could be obtained.

The blocking property and the barrier property of the resulting film were measured. The results thereof are shown in Table-1.

Table-1

| | Silica content (mg/m²) | Average particle size of Silica (µm) | Temperature for heat treatment (°C) | Blocking property | Barrier property | Remarks |
|---|---|---|---|---|---|---|
| Comparative example 1 | 0 | - | 200 | 1 | 0.0040 | |
| " 2 | 0.1 | 3.0 | 200 | 1 | 0.0042 | |
| Inventive example 1 | 0.3 | 3.0 | 200 | 3 | 0.0040 | |
| " 2 | 0.5 | 3.0 | 200 | 4 | 0.0040 | |
| " 3 | 1.0 | 3.0 | 200 | 4 | 0.0040 | |
| " 4 | 2.5 | 3.0 | 200 | 5 | 0.0037 | |
| " 5 | 5.0 | 3.0 | 200 | 5 | 0.0030 | |
| " 6 | 7.0 | 3.0 | 200 | 5 | 0.0040 | |
| Comparative example 3 | 10.0 | 3.0 | 200 | 5 | 0.0051 | The transparency was seriously inferior |
| " 4 | 2.5 | 0.03 | 200 | 1 | 0.0040 | |
| Inventive example 7 | 2.5 | 0.1 | 200 | 3 | 0.0040 | |
| " 8 | 2.5 | 10 | 200 | 5 | 0.0040 | |
| Comparative example 5 | 2.5 | 20 | 200 | Not evaluated due to the released particles & the poor quality | | |
| " 6 | 2.5 | 3.0 | 110 | 5 | 0.0080 | |
| Inventive example 9 | 2.5 | 3.0 | 160 | 5 | 0.0042 | |
| " 10 | 2.5 | 3.0 | 220 | 5 | 0.0040 | |

Measurement method

〈Blocking property〉

The processed surfaces of two sheets of film -having a width of 35 mm and a length of 100 mm- were put together face to face. While applying a 1 kg load thereonto, they were wound together round a core having a diameter of 50 mm. After allowing them to stand for 24 hours under the atmospheric conditions of 23°C and RH55%, they were pealed away from each other, and the resulting pealing conditions were evaluated and the results thereof were graded by the following 5 grades:

Evaluation standards

Grade 5:  Pealable without any resistance at all;
Grade 4:  Pealable with a slight noise;
Grade 3:  Pealable with pressed traces;
Grade 2:  Pealable with some partial adhesion; and
Grade 1:  Not pealable with adhesion

〈Barrier property〉

A subject film -having a width of 70 mm and a length of 1000 mm- was moisture-controlled under the atmospheric conditions of 23°C and RH20% for a period of time sufficient for reaching the moisture content an equilibrium state.

Next, the film was brought in the atmospheric conditions of 23°C and RH55%. From the point of time as a starting point on, the weight variations of the film were measured.

When $W\infty$ -in gram- represents an equilibrium value at 23°C and RH55%, $W_O$ -in gram- represents an equilibrium value at 23°C and RH20%, and W -in gram- represents the weight of a film, respectively, and also when $\theta$ represents a time -in minute-represented by the following equation;

$$\ell n \ \frac{W \ - \ W\infty}{W_O \ - \ W\infty} \ = \ -1,$$

the index of a barrier property is represented by the following equation;

$$P \ = \ \tfrac{1}{\theta}$$

From the results thereof, it can be proved that the smaller a P value is, the better a barrier property.

The samples of the invention were each excellent in both of blocking property and barrier property and, on the other hand, the comparative samples were each inferior in at least either one of the properties.

**Claims**

1.  A process of preparing a polyester film comprising:
    a step for preparing a coating solution,
    a step for coating the coating solution onto the polyester film,
    a step for heat treatment after the step for coating; in which
    the coating solution comprises a vinylidene chloride copolymer containing 70 to 99.5 wt % of vinylidene chloride, and a filler of average particle diameter 0.05 to 15 $\mu$m; and
    a temperature of the heat treatment is higher than that of melting poit of vinylidene chloride.

2.  The process of claim 1, wherein the average particle diameter of the filler is 0.1 to 5 $\mu$m.

3.  The process of claim 1 or 2, wherein a volume of the filler being coated onto the polyester film is 0.5 to 6.0 mg/m$^2$.

4.  The process of claim 1, 2 or 3, wherein the vinylidene chloride copolymer contains 85 to 95 wt% of vinyliden chloride.

5. The process of claim 1, 2, 3 or 4, wherein an average particle diameter of the vinylidenechloride copolymer is 0.1 to 0.13 μm.

6. The process of claim 1 or 2 to 5, wherein the coating solution contains 4 to 50 weight % of solid.

7. The process of claim 1 or 2 to 6, wherein the temperature is higher than the melting point of vinylidenechloride copolymer plus 30 degree higher in centigrade.

8. The process of claim 7,wherein the temperature is higher than the melting point plus 50 degree higher.

9. A process of prepareing a polyester film comprising:
   a step for preparing a coating solution,
   a step for coating the coating solution onto the polyester film,
   a step for heat treatment after the step for coating; in which
   the coating solution comprises a vinylidene chloride copolymer containing 85 to 95 wt % of vinylidene chloride, and 4 to 50 wt % solid of which is suspended as a latex in average particle diameter of 0.1 to 0.13 μm; and
   a filler of average particle diameter 0.1 to 5 μm; and
   a temperature of the heat treatment in the step for heat treatment is higher than 60 degree in centigrade higher than the melting poit of vinylidene chloride.

10. A process of claim 9, wherein the heat treatment is for 0.5 to 30 seconds, at 180° C to 240° C.

European
Patent Office

EUROPEAN SEARCH
REPORT

Application Number

EP 91 11 1443

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-B-1 263 206   (DU PONT DE NEMOURS)<br>* Claims 1,3; column 3, lines 45-62; column 4, lines 9-17,24-47; examples 7,8 * | 1-6 | C 08 J 7/04<br>C 09 D 127/08 //<br>C 08 L 67:02 |
| Y | | 1-10 | |
| | – – – | | |
| Y | US-A-3 322 553   (W. SEIFRIED et al.)<br>* Claims; example 1 * | 1-10 | |
| | – – – | | |
| A | GB-A-1 249 015   (ICI INDUSTRIES LTD)<br>* Claims 1,13,14; page 3, line 76 - page 4, line 49 * | 1-3 | |
| | – – – – – | | |

TECHNICAL FIELDS
SEARCHED (Int. Cl.5)

C 08 J
C 09 D

The present search report has been drawn up for all claims

| Place of search | Date of completion of search | Examiner |
|---|---|---|
| The Hague | 25 October 91 | HALLEMEESCH A.D. |